# EUROPEAN PATENT APPLICATION

(11) **EP 4 723 624 A1**
(43) Date of publication of application: **08.04.2026**
(21) Application number: 24300006.4
(22) Date of filing: 03.10.2024
(51) Int. Cl.: H04N 19/115, H04N 19/147, H04N 19/149, H04N 19/154, H04N 19/177, G06N 3/08

(54) **METHODS FOR ENCODING VIDEO DATA**

(71) Applicant: Sony Interactive Entertainment Europe Limited, London W1F 7LP (GB)
(72) Inventor: SOLTANAYEV, Shakarim, London, W1F 7LP (GB); ZISIMOPOULOS, Odysseas, London, W1F 7LP (GB); ANAM, Mohammed Ashraful, London, W1F 7LP (GB); ANDREOPOULOS, Ioannis, London, W1F 7LP (GB)
(74) Representative: Gill Jennings & Every LLP

(57) **Abstract**

A method for encoding video data, comprising: receiving, at a machine learning model, encoding statistics derived from an encoding, performed by an external encoder, of at least one frame of a first video scene; processing the received encoding statistics using the machine learning model to determine one or more encoder settings for the external encoder; and outputting, from the machine learning model, the determined one or more encoder settings for use by the external encoder to encode a second video scene. The machine learning model is trained to predict, using encoding statistics input into the machine learning model, encoder settings which, when used by the external encoder to encode video data, optimise a data rate and/or video quality associated with the encoded video data.

## Description

### Technical Field

The present disclosure concerns computer-implemented methods for processing video data. In particular, but not exclusively, the disclosure concerns computer-implemented methods, computing devices and computer program products for encoding video data.

### Background

Video encoders are used to compress video data, e.g. for storage and/or transmission over a network. Some standard video encoders provide for content adaptivity by using variable-bitrate, VBR, control over successive video frames with a constraint on the number of bits allocated to video frames within a time window. The window of the VBR control is typically based on a video buffer verifier, VBV, model from the Motion Pictures Expert Group, MPEG, where incoming frames are allocated a certain number of bits depending on the remaining bit budget of the utilized VBV model and the quantization parameters used within each video frame. Quantization parameters may be adjusted in a content-adaptive manner in order not to exceed the VBV VBR constraint.

While there are numerous different algorithms for content-adaptive quantization step size, QSS, control, they may be considered to share common objectives: control the increase of QSS for frames that are difficult to predict from past or future frames; conversely, control the decrease of QSS for easy-to-predict frames; and minimize the frames that need to be dropped in order not to exceed the VBV bit budget constraint.

Content adaptivity has been extended more recently to include resolution adaptivity, e.g. via a dynamic optimizer, DO, approach, as well as selection of QSS or constant-rate factor, CRF, parameters in standard video encoders (e.g., AVC, HEVC, AV1, AV2, VVC, etc.) based on convex-hull optimization, CHO. DO and CHO approaches, however, always require multiple encoder passes. This requirement may make them impractical for real-time encoding (or more generally, delay-constrained encoding). Known attempts to circumvent this limitation include the extraction and use of content features from video frames and linking them to QSS or CRF parameters used during DO or CHO optimization via machine learning methods. However, this requires access to the input (or decoded) video frames, which makes it computationally-intensive and impractical for low-latency and/or resource-constrained encoding.

Overall, known forms of VBR encoding require implementation within a specific encoder and have to operate in conjunction with a VBV model; known DO and CHO methods are computationally complex and incur delay as they operate on a group of frames and need multiple encoding passes and/or access to input frames in order to extract content features.

The present disclosure seeks to solve or mitigate some or all of these above-mentioned problems. Alternatively and/or additionally, aspects of the present disclosure seek to provide improved methods for encoding video data.

### Summary

In accordance with a first aspect of the present disclosure there is provided a computer-implemented method for encoding video data, the method comprising:
receiving, at a machine learning model, encoding statistics derived from an encoding, performed by an external encoder, of at least one frame of a first video scene;
processing the received encoding statistics using the machine learning model to determine one or more encoder settings for the external encoder; and
outputting, from the machine learning model, the determined one or more encoder settings for use by the external encoder to encode a second video scene,
wherein the machine learning model is trained to predict, using encoding statistics input into the machine learning model, encoder settings which, when used by the external encoder to encode video data, optimise a data rate and/or video quality associated with the encoded video data.

By predicting encoder settings for the external encoder which optimise a data rate and/or video quality associated with encoded video data produced by the external encoder, an improvement in the performance of the external encoder is facilitated. The external encoder can thus operate in a more optimised manner, in terms of the data rate and/or video quality associated with encoding. Further, the performance of the external encoder may be tuned in a content-adaptive manner, since the adjusting of the encoder settings is performed on the basis of encoding statistics derived from previously-encoded frames, and the encoding statistics may be dependent on the image content of those frames. Additionally, the input to the machine learning model comprises encoding statistics, rather than image or video data (whether raw image or video data or encoded image or video data). In particular, the machine learning model may be arranged not to receive or process image or video data. Encoding statistics may be significantly smaller (in terms of an amount of data) than image or video data. This enables a more lightweight and/or efficient machine learning model to be used, since the inputs which are processed may comprise only a few kilobytes, for example. Moreover, the outputs of the machine learning model may, in embodiments, comprise binary decisions for a given encoding setting or parameter. Such output data may also therefore be very small and/or efficient to process. Accordingly, a lightweight machine learning model architecture can run efficiently while a current video sequence is being encoded. The machine learning model is also learnable (that is, has learnable parameters), and can be trained on real data. Such a learnable approach may make fewer assumptions than non-learnable approaches, can learn patterns that are not easily derived or modelled mathematically, and can be tuned to specific types of data. Moreover, the machine learning method described herein does not require multiple encoding passes for each frame and/or video scene, thereby reducing latency.

The machine learning method described herein can operate over any external encoder (rather than being tied to a specific encoder) and does not require access to the encoder operation, e.g. the source code or specific implementation of the external encoder. Instead, the encoder is treated as an external binary or "black box". The machine learning model receives encoding statistics derived from an encoding performed by the external encoder, and outputs encoder settings for use by the external encoder, but no knowledge of the specific implementation or operation of the external encoder is required at the machine learning model. The machine learning model may operate independently of the external encoder. The machine learning method described herein is thus flexible and adaptable across a wide variety of encoders and applications.

The methods described herein are particularly applicable to resource- and/or delay-constrained environments, because they do not require the buffering of future frames of a video segment to be encoded, and multiple encoding passes are not required. Moreover, the runtime resource requirements of the machine learning model are very limited, because the input of the machine learning model comprises compressed-domain statistics, which are much smaller and more efficient to process than image data. Accordingly, the disclosed methods provide low-latency content-adaptive encoder tuning, based on compressed-domain statistics and machine learning methods.

In embodiments, the machine learning model comprises an artificial neural network, ANN. Such an ANN may comprise a set of interconnected weights, which may be applied to input data (e.g. encoding statistics) to process the input data. The ANN may be configured to receive encoding statistics as an input and to output encoder settings, after applying the weights of the network to the input data. That is, the ANN may be configured to map encoding statistics of an encoding of one or more frames of a first scene to encoder settings for encoding a second scene. The encoder settings may then be passed to the external encoder for use in encoding the second scene. The machine learning model may comprise a model other than an ANN in other embodiments. For example, the machine learning model may comprise a perceptron, a decision tree, or a support vector machine. More generally, a machine learning model is a model that, after being trained on a given dataset, can be used to make predictions or classifications on new data.

'Training' a machine learning model, e.g. an ANN, as described herein refers to adjusting (or `updating') the internal parameters of the model, e.g. the weights of the ANN that will be applied to the encoding statistics to process the encoding statistics. It will be understood that training of the machine learning model may occur prior to the processing of the encoding statistics described above. That is, when the above-described method is performed, the training of the machine learning model may have already taken place, and the machine learning model is thus a `trained machine learning model'. In alternative embodiments, training of the machine learning model occurs as part of the above-described method.

In embodiments, the method further comprises encoding, at the external encoder, the second video scene using the determined one or more encoder settings. In alternative embodiments, the method does not comprise encoding the second video scene at the external encoder. In either case, however, the machine learning model is configured to output encoder settings that are useable by the external encoder, regardless of whether or not the external encoder actually performs an encoding of the second video scene. The external encoder may be able to use various different encoder settings to encode the second video scene, and the machine learning model is configured to output one or more selected encoder settings of the various available encoder settings, based on a prediction of which encoder settings will optimise a data rate and/or quality of the encoded second video scene.

In embodiments, the first video scene and the second video scene are consecutive scenes in a predefined sequence of video scenes. A video scene may also be referred to as a "video segment", e.g. a division or segment of a video. A given video scene may, for example, be a part of a video in which the depicted action occurs in a particular location. Additionally or alternatively, a given video scene may be a part of a video that depicts a particular character or set of characters. The first and second video scenes may be consecutive (or non-consecutive) segments of an overall video sequence. The second video scene may be a later scene in the sequence than the first video scene, for example. Each of the first and second video scenes may comprise one or more frames, also referred to as images.

In embodiments, the processing of the encoding statistics by the machine learning model is performed prior to completion of an encoding of at least one further frame of the first video scene performed by the external encoder. For example, the processing of the encoding statistics may be performed prior to or during the encoding of the at least one further frame of the first video scene. The encoder settings for the second video scene may therefore be determined while the external encoder is still encoding the first video scene. The first and second video scenes may be consecutive scenes in a sequence. In embodiments, the determining of the one or more encoder settings by the machine learning model is performed substantially in real time. That is, the encoder settings for the second video scene may be determined "on-the-fly", while the encoding of the first video scene is still being performed. After one or more frames of the first video scene have been encoded, encoding statistics derived from that encoding are processed by the machine learning model to determine the optimal encoder settings for the second (e.g. next) video scene, while the external encoder continues to encode the rest of the first video scene. Consequently, the determined optimal encoder settings are already available to the external encoder when the external encoder moves on to encoding the second video scene, and the external encoder can adopt those determined settings accordingly, without unwanted latency or delay being introduced. For example, the above-described methods may be performed during live video streaming, e.g. in a cloud-based video game application, in which video scenes are encoded and transmitted via a network to one or more client devices (e.g. games consoles, mobile phones or personal computers). Such applications may require a sequence of video scenes to be encoded and transmitted in substantially real time (e.g. without a user-perceived delay, or having a latency below a predetermined threshold). In embodiments, the disclosed methods are used in a real-time low-latency video streaming system.

In embodiments, the method further comprises obtaining additional encoding statistics derived from the encoding of the second video scene performed by the external encoder using the determined one or more encoder settings. In embodiments, the method comprises processing the additional encoding statistics using the machine learning model to determine one or more updated encoder settings for the external encoder. In embodiments, the method comprises outputting, from the machine learning model, the one or more updated encoder settings for use by the external encoder to encode a third video scene. The third video scene, or segment, may be a later part of the same video sequence as that of the first and/or second video scenes. For example, the third video scene may be a next successive scene relative to the second video scene, and the second video scene may be a next successive scene relative to the first video scene. Accordingly, as the external encoder encodes each video scene in a sequence, the encoding statistics derived from that encoding are used to determine updated encoder settings for encoding the next video scene in the sequence.

In embodiments, the machine learning model is trained to predict encoder settings which correspond to an optimal rate-quality convex hull for encoding video data. Causing the external encoder to operate at (or close to) the rate-quality convex hull for encoding video data, by selecting encoder settings which correspond to points on the rate-quality convex hull, enables the rate-quality performance of the external encoder to be optimized. In some cases, the convex hull may comprise multiple bitrate zones, and the machine learning model may be trained to predict encoder settings which correspond to optimal rate-quality points in each bitrate zone.

In embodiments, the one or more encoder settings for the external encoder comprise one or more of: an encoding resolution, one or more scene-cut detection parameters, one or more coding block encoding modes, and one or more rate control and/or encoding buffer control parameters. The one or more encoder settings may comprise other settings and/or parameters in alternative embodiments. The encoder settings may be used to control operation of the external encoder. As such, the encoder settings may be referred to as "encoder control parameters" in some cases.

In embodiments, processing the received encoding statistics using the machine learning model further comprises determining, using the machine learning model, one or more decoder settings for decoding encoded data of the second video scene. In embodiments, the method comprises outputting, from the machine learning model, the determined one or more decoder settings for use by a decoder to decode the encoded data of the second video scene. As such, the machine learning model may be configured to determine both encoder settings and decoder settings, based on inputted encoding statistics. The machine learning model may be trained to predict decoder settings which optimise a video quality of decoded video data, for example. In embodiments, the one or more decoder settings comprise one or more upscaling algorithm parameters and/or one or more post-processing algorithm parameters. Other decoder settings may be determined and/or used in other embodiments. The determined decoder settings may be transmitted to the decoder as part of a compressed bitstream including encoded video data. In alternative embodiments, the machine learning model determines encoder settings but not decoder settings.

It will be understood that encoding and decoding steps may occur at two separate locations. For example, the second video scene may be encoded (by the external encoder) at a server, and the encoded video data may be transmitted as a bitstream to a client device, which performs the corresponding decoding steps. That is, the encoder and the decoder themselves may be separated, although both may operate in accordance with a particular video codec. Alternatively, both encoding and decoding may be performed at a single location (e.g. on a single device) in some cases.

As mentioned above, the encoding statistics are derived from an encoding of one or more frames of the first video scene. Accordingly, when the encoding statistics are received, the encoding of the one or more frames of the first video scene by the external encoder has already taken place, such that encoding statistics can be derived from the encoding. This is in contrast with the second video scene, which has not yet been encoded. In some cases, the encoding statistics are derived from an encoding of a single frame of the first video scene. Alternatively, the encoding statistics may be derived from an encoding of multiple frames of the first video scene. For example, the encoding statistics may be derived from an encoding of the entirety of the first video scene (i.e. all of the frames of the first video scene).

In embodiments, the encoding statistics are derived from an encoding, performed by the external encoder, of frames from a plurality of video scenes including the first video scene. For example, the encoding statistics may be derived from an encoding of frames from one or more scenes preceding the first video scene in a sequence of scenes, as well as one or more frames from the first video scene. The encoding statistics may be derived from an encoding of a single frame of each video scene, from multiple frames of each video scene, or from every frame of each video scene. Deriving encoding statistics from encodings of frames from multiple video scenes may provide increased accuracy in determining optimal encoder settings (due to more available data and/or a greater variety of data) compared to a case in which only a single video scene is used. In alternative embodiments, the encoding statistics are derived from an encoding of one or more frames from the first video scene only. This may be more efficient than deriving and/or using encoding statistics from multiple video scenes.

In embodiments, the method comprises receiving a compressed bitstream, generated by the external encoder, of the at least one frame of the first video scene, processing the compressed bitstream to derive the encoding statistics, and inputting the derived encoding statistics into the machine learning model. As such, deriving the encoding statistics may comprise parsing a compressed (i.e. encoded) bitstream generated by the external encoder. Accordingly, the external encoder itself is not required to provide the encoding statistics directly. Instead, the external encoder may simply generate a compressed bitstream of the first video scene in accordance with its usual behaviour. The compressed bitstream is then received and processed to extract the encoding statistics, which are then inputted to the machine learning model. In some cases, the encoding statistics may be provided as metadata in the compressed bitstream.

In embodiments, the method comprises obtaining the encoding statistics via an application programming interface, API, of the external encoder. Accordingly, the encoding statistics may be provided by the external encoder (e.g. via the API of the external encoder), or may be extracted from the encoded bitstream generated by the external encoder. That is, the deriving of the encoding statistics may be performed by the external encoder itself, or separately from the external encoder. In either case, however, access to the source code or the internal implementation of the external encoder is not required.

The encoding statistics are representative of how the external encoder has encoded the at least one frame of the first video scene. The encoding statistics (which may also be referred to as "encoding metadata") encapsulate the encoding decisions taken by the external encoder and/or summary rate and distortion per frame, or within an encoding slice (region) of a frame. The encoding statistics may be derived with granularity that can reach the coding block level, or in some cases the individual pixel level. In embodiments, the encoding statistics comprise one or more of: a number of intra-encoded coding blocks in the at least one frame, a number of skipped coding blocks in the at least one frame, a number of inter-encoded coding blocks in the at least one frame, an average, minimum and/or maximum quantization step size used in the at least one frame, a number of intra-, skip and/or inter-encoded blocks of encoding of each slice within the at least one frame, an average, minimum and/or maximum sum-of-absolute-difference of each encoding slice within the at least one frame, and a compressed bitstream size of each encoding slice within the at least one frame. The encoding statistics may comprise a combination of several of the above-mentioned statistics, or a single one of such statistics. The encoding statistics may comprise other values, parameters or data in alternative embodiments.

In embodiments, the machine learning model is trained by calculating a loss function comprising one or more of: a binary cross-entropy loss, a Hinge loss, an L1 or L2 loss, a Huber loss, or a cosine similarity or log-cosh loss. Other loss functions may be used in alternative embodiments.

In embodiments, the video quality associated with encoding video data using the external encoder is measured using one or more of: a distortion metric, a perceptual score, or a quality score that incorporates the impact of dropped frames during encoding. Other quality metrics or scores may be used in alternative embodiments.

In embodiments, the machine learning model is trained without receiving video data as an input. In embodiments, the machine learning model is arranged to receive only encoding statistics as an input. Accordingly, the machine learning model may be configured to ingest encoding statistics rather than video data (e.g. pixel data). Encoding statistics may be significantly smaller, and therefore less computationally expensive to process, than image or video data. As such, the machine learning model may be more lightweight and/or efficient than models that receive and/or process image or video data. This facilitates the determining of encoder settings in substantially real time, during the encoding (and optionally the streaming) of a video sequence which includes the first and second video scenes, and reduces latency.

In embodiments, processing the received encoding statistics using the machine learning model is performed prior to any encoding of the second video scene performed by the external encoder. That is, the second video scene has not previously been encoded by the external encoder when the encoder settings for encoding the second video scene are determined by the machine learning model. Accordingly, the second video scene may be encoded only once, after the encoder settings for encoding that video scene have been determined.

In embodiments, the machine learning model is trained by: for each encoder setting of a plurality of different encoder settings of the external encoder: encoding a training video scene with the external encoder using the encoder setting; and calculating one or more rate-quality values based on the encoding of the training video scene with the external encoder using the encoder setting; determining a rate-quality convex hull using the calculated rate-quality values for the plurality of different encoder settings; calculating slope values for the determined rate-quality convex hull; based on a comparison of the calculated slope values with a predetermined threshold, discarding one or more encoder settings of the plurality of different encoder settings to obtain a reduced set of encoder settings; and adjusting one or more parameters of the machine learning model using the reduced set of encoder settings. By discarding certain encoder settings based on the corresponding slope values in the rate-quality convex hull, points that lead to extreme drops in quality, or saturating quality improvement, are removed. Such points may be undesirable for the external encoder to use, in terms of achieving a particular rate-quality objective. Accordingly, a given encoder setting may be discarded if its corresponding slope value is above a predetermined threshold (thus indicating that it may lead to an extreme drop in quality), and/or a given encoder setting may be discarded if its corresponding slope value is below a predetermined threshold (thus indicating that quality improvement is saturating). In embodiments, encoder settings which correspond to points on the convex hull with quality values above a predetermined threshold are discarded. That is, the discarding of encoder settings may be based on a comparison of corresponding quality values with a predetermined threshold, rather than (or in addition to) a comparison of corresponding slope values with a predetermined threshold. This ensures that rate-quality points that are already in the visually lossless region are removed. By removing such encoder settings from the training of the machine learning model, the resulting performance of the trained machine learning model is improved, in terms of selecting more optimal encoder settings for the external encoder.

In embodiments, the external encoder is a standards-based encoder, e.g. conforming to a particular video coding standard. In some cases, the external encoder may be a proprietary encoder. The external encoder itself is not modified as a consequence of the presently-disclosed methods. In embodiments, the methods described herein do not require multiple encoder passes. That is, the methods for encoding video data described herein may involve only a single encoder pass for each frame and/or video scene. The methods of processing video data described herein may be performed on a batch of video data, e.g. a complete video file for a movie or the like, or on a stream of video data.

In accordance with another aspect of the disclosure there is provided a computing device comprising:
one or more processors; and
memory;
wherein the computing device is arranged to perform, using the one or more processors, any of the methods described above. The computing device may comprise or be arranged in a server, for example. Alternatively, the computing device may comprise or be arranged in a user device.

In accordance with another aspect of the disclosure there is provided a computer program product arranged, when executed on a computing device comprising one or more processors and memory, to cause the computing device to perform, using the one or more processors, any of the methods described above.

It will of course be appreciated that features described in relation to one aspect of the present disclosure described above may be incorporated into other aspects of the present disclosure.

### Description of the Drawings

Embodiments of the present disclosure will now be described by way of example only with reference to the accompanying schematic drawings of which:
- Figure 1: is a schematic workflow diagram showing a video processing system in accordance with embodiments;
- Figure 2: shows an example parameter exploration space for video encoding and decoding, in accordance with embodiments;
- Figure 3A: shows bitrate-quality results for HEVC encoding with default and tuning options, in accordance with embodiments;
- Figure 3B: shows bitrate-quality results for HEVC encoding using convex-hull selection, in accordance with embodiments;
- Figure 4A: is a schematic workflow diagram showing a method for encoding video data, in accordance with embodiments;
- Figure 4B: is a schematic workflow diagram showing a method for decoding video data, in accordance with embodiments;
- Figure 5A: is a schematic workflow diagram showing a data collection and pre-processing method, in accordance with embodiments;
- Figure 5B: is a schematic workflow diagram showing a training method in accordance with embodiments;
- Figure 6A: shows bitrate-quality results for an example multi-bitrate/multi-resolution encoding for 5 bitrate zones of a video encoder, in accordance with embodiments;
- Figure 6B: shows retained bitrate-quality results for the example of Figure 6A, in accordance with embodiments;
- Figure 7: is a schematic diagram showing an example machine learning model architecture, in accordance with embodiments;
- Figure 8: is a flowchart showing the steps of a method for encoding video data in accordance with embodiments; and
- Figure 9: is a schematic diagram of a computing device in accordance with embodiments.

### Detailed Description

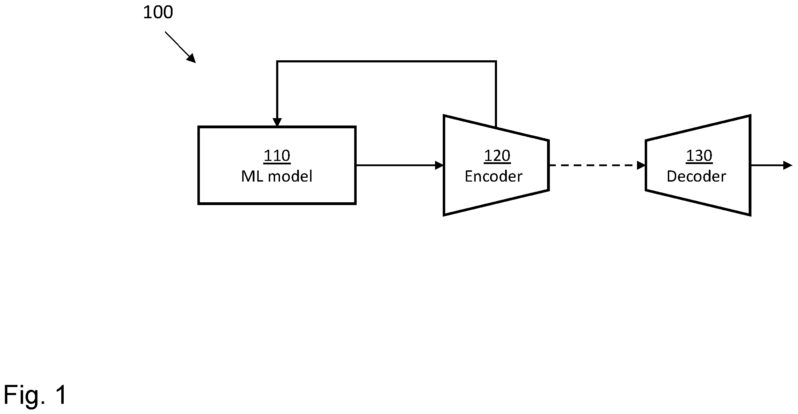

Figure 1 is a schematic diagram showing a video processing system 100 according to embodiments. The video processing system 100 includes a machine learning model 110, an external encoder 120, and optionally a decoder 130. The encoder 120 is configured to encode video data to generate a compressed bitstream, which may then be sent, e.g. via a communications network, to the decoder 130, which decodes the encoded video data. As will be discussed herein, the machine learning model 110 is configured to predict, using encoding statistics input into the machine learning model 110, encoder settings for the encoder 120 which, when used by the encoder 120 to encode video data, optimise a data rate and/or video quality associated with the encoded video data. The encoder 120 may be a standards-based encoder. Similarly, the decoder 130 may be a standards-based decoder. It will be understood that the encoding and decoding stages may be performed at different locations and/or devices. For example, video data may be encoded at a server and then transmitted via a communications network to a client or user device, which performs the decoding stage. After decoding, the video data may be post-processed to generate an output for display.

In embodiments, the machine learning model 110 comprises an artificial neural network, ANN. The ANN may comprise any combination of weights connected in a network and having a non-linear function (e.g. an activation function). Example instantiations comprise multiple layers of weights and activation functions. Such layers of interconnected weights form an artificial neural network. Such embodiments may be trained with back-propagation of errors computed at the output layer, using gradient descent methods, for example.

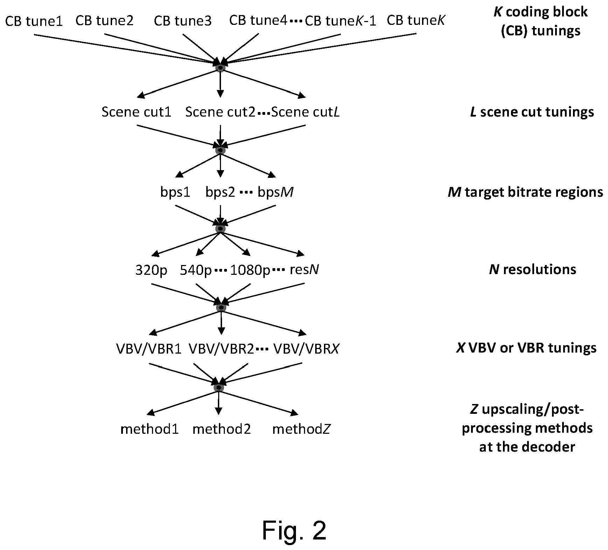

The present disclosure provides a machine learning-based method of tuning encoder settings in a content-adaptive and efficient manner. Figure 2 shows an example of the overall parameter space for the tuning of video encoder (and decoder) settings to be explored, based on scene cuts. As can be seen in Figure 2, the tuning of encoding and decoding options may comprise a composite of various selection options, including, but not limited to: *K* coding block, CB, tuning options, such as quantization parameters, CRF tuning, deblocking options in encoders, or CB partitioning modes to enable or disable; *L* scene cut tuning options, e.g. selection of a scene-cut detection algorithm and in-algorithm tuning of thresholds or similar parameters that determine when a scene cut is generated; *M* target bitrate regions to optimize for, e.g. 2.5mbps-5mbps, 5mbps-10mbps, 10-20mbps, etc.; *N* resolution options to select for from an available list of downscaling or upscaling options, e.g. 360p, 480p, 720p, 1080p, 1440p, 2160p, etc.; *A* VBV/VBR tuning options to control buffer size and/or rate-control parameters; *Z* upscaling or post-processing options on the decoder side, such as a choice of upscaling or denoising algorithms and their internal hyper-parameter tuning. Further types of options and/or settings may be selectable in alternative embodiments.

The combination of *K·L·M·N·X·Z* options leads to a very large number of parameters that must be explored in substantially real time, e.g. for each video scene to be encoded with a low-latency encoder. For example, for each new scene where the video encoder/decoder is permitted to reset its encoding and scene-cut parameters (e.g. due to an instantaneous-decoder-refresh, IDR, frame), optimal decisions must be made for the utilized resolution, bitrate regions, post-processing options, etc.

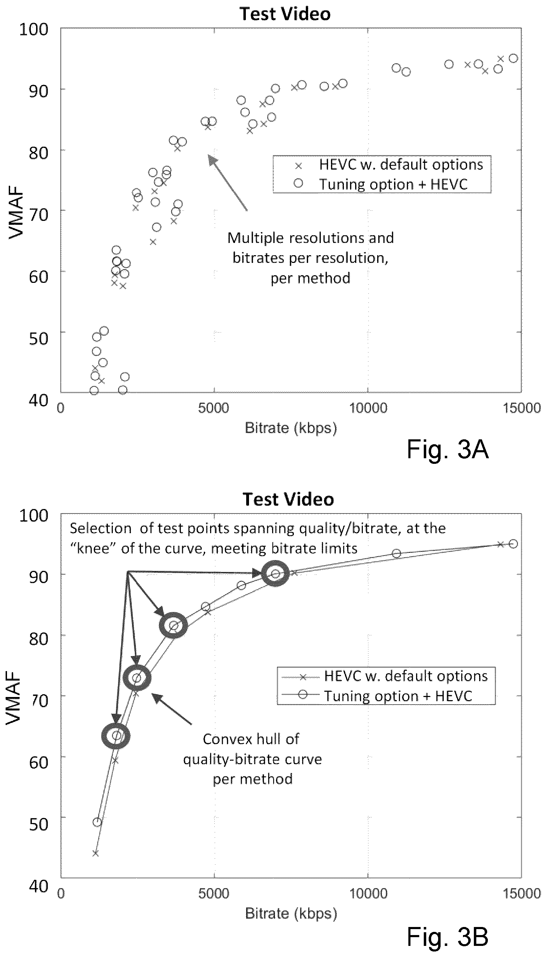

An example of the potential impact of optimal versus suboptimal encoder settings (or decisions) is shown in the bitrate-quality plots of Figures 3A and 3B. In particular, Figure 3A shows the results of several bitrate-quality encodings of default options (illustrated with crosses) and a set of tuning options (illustrated with circles) of an HEVC encoder using the video multi-method assessment fusion, VMAF, metric as an indication of quality. As can be seen from Figure 3A, multiple points emerge for each bitrate region and for each tuning option versus default parameters. Given this is a two-dimensional optimization problem (quality-vs-bitrate) and the rate-quality behaviour of encoders for quality scores is expected to be convex, to determine optimality, the notion of convex-hull encoding may be used. Points that are optimal appear in the convex plane of each method, and the hull of optimal points can be determined, e.g. using optimization algorithms such as the Jarvis march. As shown by Figure 3B, once the convex hull of each method has been determined, the optimal encoding parameters producing any subset of points can be selected and used for each bitrate zone of interest. That is, Figure 3B shows optimal point selection for the tuning options and default options using convex-hull selection. This can be repeated for any number of tuning options, and the overall convex hull can be determined and used. However, carrying this out may require multiple encodings for each video scene to be encoded, and is computationally prohibitive for real-time/low-latency video encoding and decoding. It also requires access to the actual video frames of the scene, which are not available without increasing the coding and transmission delay.

In the presently-disclosed methods, machine learning is used to infer the optimal points of the convex hull of a future video scene using encoding statistics provided by the encoder for current and optionally also previous video scenes. Some examples of encoding statistics (also referred to as `encoding metadata') are provided in Table 1. Such encoding statistics may be provided for each encoded frame.

**Table 1: Examples of encoding statistics for a given encoded frame**

| **Name of encoding statistic** | **Explanation** |
|---|---|
| totIntraBlocks | Number of intra-encoded CBs in the frame |
| totSkipBlocks | Number of skipped CBs in the frame |
| totInterBlocks | Number of inter-encoded CBs in the frame |
| avQP, minQP, maxQP | Average, minimum and maximum QSS used in the frame |
| sliceIntraBlocks[i], sliceSkipBlocks[i], sliceInterblocks[i] | Number of intra-, skip and inter-encoded blocks of encoding slice i within the frame |
| avSAD[i], minSAD[i], maxSAD[i] | Average, minimum and maximum sum-of-absolute-difference of encoding slice i |
| csize[i] | Compressed bitstream size of slice i |

Other examples of encoding statistics may be used in alternative embodiments. The encoding statistics encapsulate the encoding decisions and summary rate and distortion per frame, or within an encoding slice (region) of a frame, and they can be obtained from an external encoder with granularity that can reach the CB level or, in some cases, the individual pixel level. Access to these statistics can be obtained via the encoder API, or by parsing the compressed bitstream. This does not require access to the source code or the internal implementation of the encoder.

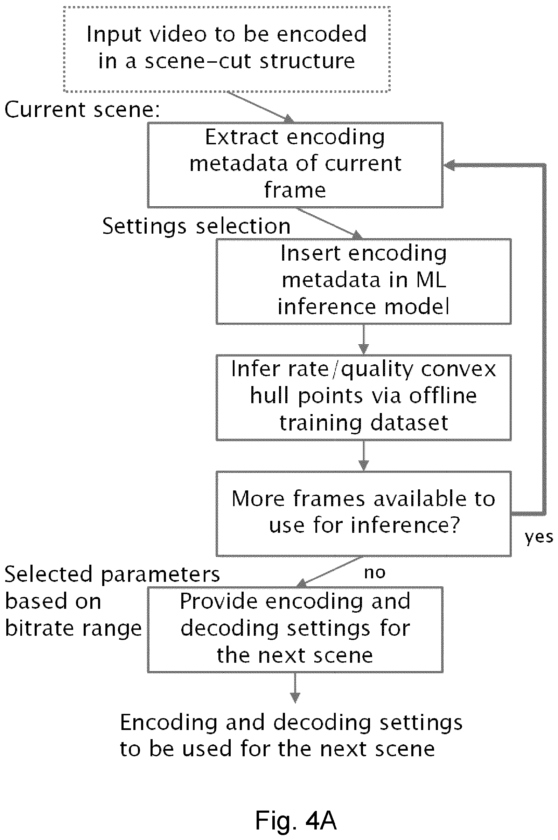

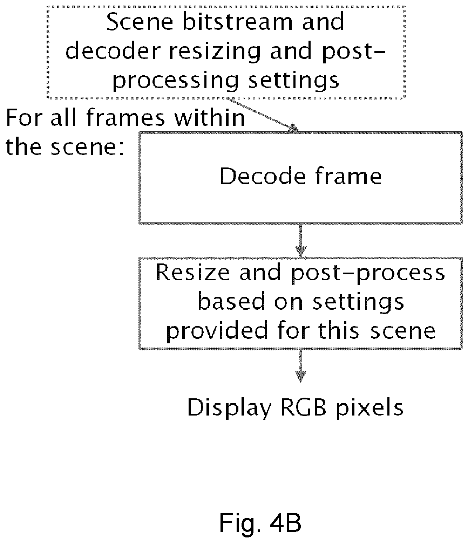

Figures 4A and 4B show schematically an example of encoding (Figure 4A) and decoding (Figure 4B) video data using the presently-described methods, according to embodiments. Figures 4A and 4B show encoding and decoding at inference, i.e. with a trained machine learning model. Optimized encoding and decoding parameters are selected based on encoding statistics of frames of each scene. Frames of previous scenes can be included in addition to frames of the current scene in the encoding settings selection. As shown in Figures 4A and 4B, input video is processed in a scene-by-scene manner by the encoder. Whenever a scene cut is detected based on the utilized scene-cut detection algorithm, an IDR frame is inserted. This ensures the bitstream for the new scene is independent of the bitstream of previous scenes. For the current scene, the encoding and decoding may use predetermined encoder and decoder settings, in order to ensure low-latency encoding and decoding. However, during the current scene encoding, encoding statistics or metadata, e.g. of the type shown in Table 1, are extracted for one or more frames. These encoding statistics are collected in a buffer to be inserted in the machine learning inference model. Once sufficient frames have been collected, the machine learning inference model executes and determines the encoding and decoding settings to be used for the next video scene. The machine learning inference model can also optionally utilize frames from previous scenes. The machine learning inference model does not need to utilize encoding statistics from the entirety of the current scene. In some cases, the machine learning inference model utilizes encoding statistics from only a single frame of the current scene. This also facilitates low-resource execution, as the machine learning inference algorithm can execute in low-priority using the batch of encoding statistics while the current scene encoding continues. Once the inference model derives the optimal settings to use, these encoding and decoding settings are then enabled for the subsequent scene.

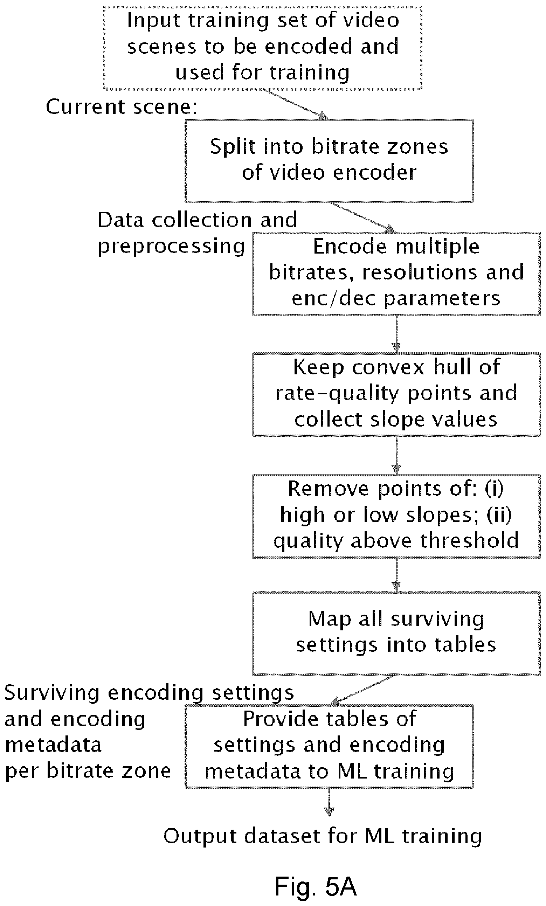

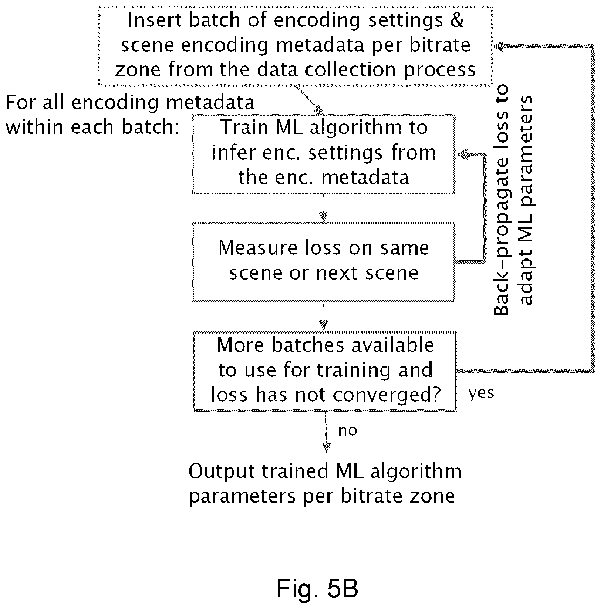

The training of the machine learning model may be carried out in two stages. These are shown schematically in Figures 5A and 5B, respectively. The first stage (shown in Figure 5A) comprises data collection and pre-processing, and the second stage (shown in Figure 5B) comprises machine learning training based on the pre-processing data. These stages may be carried out offline using training data, but can also be periodically executed during live video encoding (e.g. in an 'online' stage) in order to refine the machine learning model and/or customize it to the specific video content of interest. This could be the case, for example, when encoding types of content that have certain types of statistics for specific times, for example video game scenes of a given chapter/level/gameplay area of a game title.

In the data collection and pre-processing stage (shown in Figure 5A), for each video scene under consideration, encoding of the scene is carried out with all encoder and decoder parameters under consideration and multiple bitrates within each bitrate zone are used. The encoder and decoder parameters under consideration may be those described above with reference to Figure 2, for example. Once the encoding results are obtained, rate-quality calculations are carried out.

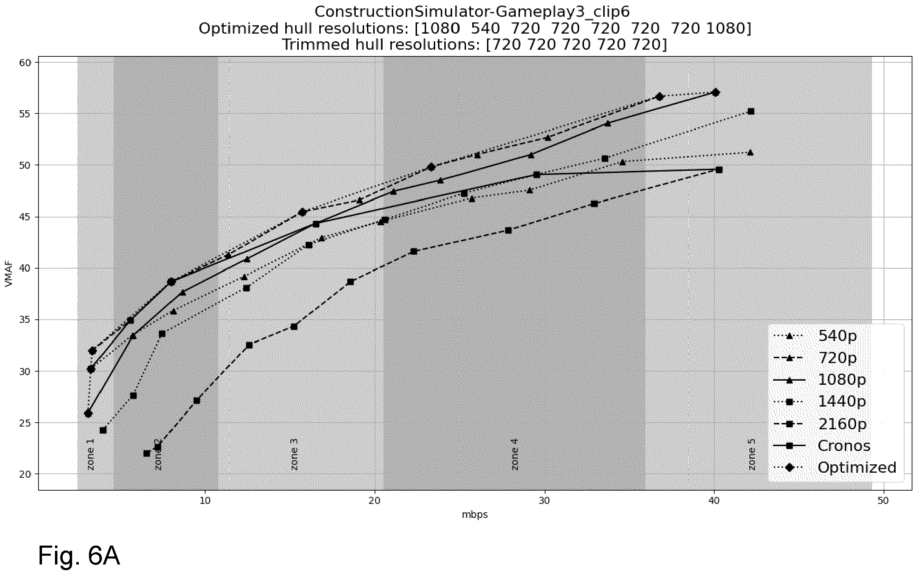

An example of rate-quality results obtained with multiple encoding settings is shown in Figure 6A. In particular, Figure 6A shows an example of multi-bitrate/multi-resolution encoding carried out for 5 bitrate zones of a video encoder. The different curves indicate different resolutions of the encoder (as an example of a tunable encoder setting); the curve labelled "Optimized" indicates the convex-hull optimized encoding after convex hull selection.

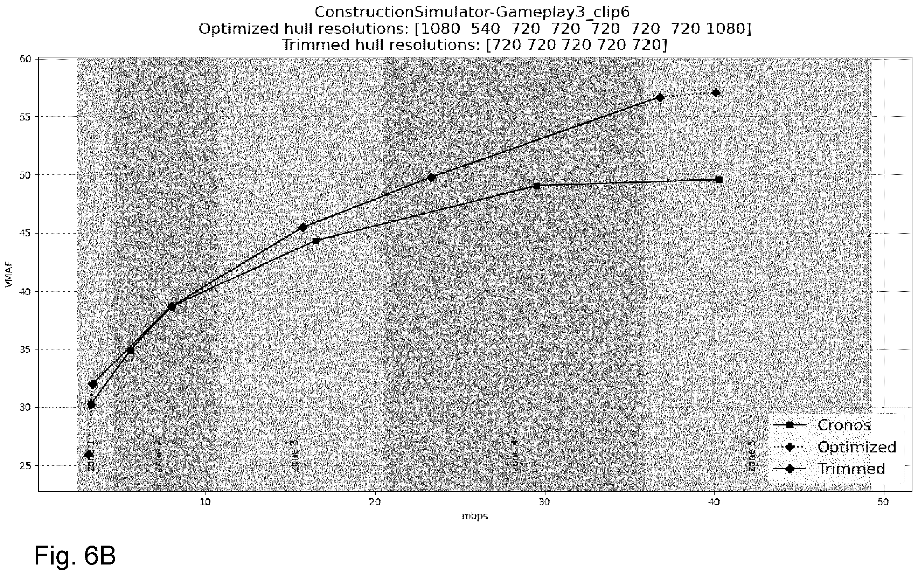

From the ensemble of results, the data collection and pre-processing method of Figure 5A retains the convex hull of rate-quality points and collects slope values for the convex hull curve. Points with slope values that are above or below predetermined thresholds are removed, and points with quality values above a predetermined threshold are also removed. An example of the retained results (after convex hull selection and removal of points with slope values that are above or below predetermined thresholds and points with quality values above a predetermined threshold) is shown in Figure 6B. These removals ensure that: (i) points that lead to extreme drops in quality or saturating quality improvement are removed; and (ii) rate-quality points that are already in the visually lossless region are removed (e.g. for VMAF values above 94).

Beyond the use of distortion metrics such as peak signal to noise ratio or more perceptual metrics like VMAF, other quality scores can be used, which encapsulate perceptual quality as perceived by human viewers, or incorporate the impact of dropped frames during encoding. The disclosed methods are not constrained on the exact nature of the quality metric being used, and quality can also (or alternatively) be measured based on subjective tests or other psychovisual methods of quality assessment in video playback.

Once the removal steps have been carried out, the retained points from the convex hull are mapped into tables. An example of a table corresponding to the results of Figure 6B is given in Table 2. In this particular example, the encoder parameter under optimization is the encoding resolution, and the retained encoder settings for each bitrate zone are shown with values of "1" in the table. In this example, encoding at 720p resolution was found to be optimal for each zone, and is therefore represented with the value "1" in the table. This experiment is repeated for all encoder and/or decoder parameters being optimized, e.g. the parameters shown in Figure 2 for the encoder and/or decoder. This creates multiple tables, each one corresponding to an encoder parameter selection, along with the corresponding encoding statistics for the given scene.

**Table 2: Encoder parameter table for the truncated convex hull curve of Figure 6B.**

| | 540p | 720p | 1080p | 1440p | 2160p |
|---|---|---|---|---|---|
| zone_1 | 0 | 1 | 0 | 0 | 0 |
| zone_2 | 0 | 1 | 0 | 0 | 0 |
| zone_3 | 0 | 1 | 0 | 0 | 0 |
| zone_4 | 0 | 1 | 0 | 0 | 0 |
| zone_5 | 0 | 1 | 0 | 0 | 0 |

An example of the second stage of the training process, after data collection and pre-processing, is shown in Figure 5B. The example training process trains the machine learning model to infer the optimal enabling/disabling of an encoder parameter within each bitrate zone, e.g. enabling/disabling a given resolution from the encoding resolution parameters of Table 2. As shown in Figure 5B, the training process starts by inserting a batch of encoder settings and scene encoding metadata (i.e. encoding statistics) from the corresponding scene or from a previous scene. For all encoding metadata of all frames within the batch, the machine learning model infers the encoder settings and a loss function is calculated on the same scene or the next scene. The loss function may comprise one or more of the following losses; a binary cross-entropy loss / Log loss, a Hinge loss, an L1 or L2 loss, a Huber loss (or regularized norm loss), a cosine similarity or log-cosh loss. The loss is back-propagated to adjust the parameters (e.g. weights) of the machine learning model. If the loss function converges according to a predetermined optimization criteria, or no more batches are available to use for training, then the machine learning model is made available for each bitrate zone. Once all machine learning inference models are trained for all bitrate zones and all encoder settings/parameters of interest, the ensemble of models is used within each scene in order to infer optimal encoder and decoder settings for the next scene.

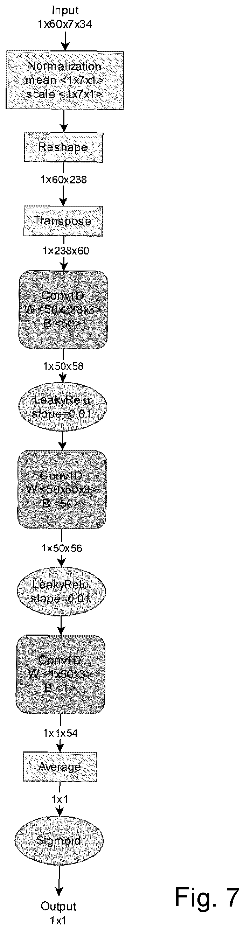

Figure 7 shows schematically an example of the architecture of the machine learning model. In the example shown in Figure 7, the machine learning model comprises a normalization layer, reshaping and transposing layers, and three convolutional layers. The first two convolutional layers are each followed by a leaky ReLU activation function. Averaging and sigmoid functions are used after the last convolutional layer. In this example, the final output of the model is a binary value providing one output encoder setting option (e.g. corresponding to an enable/disable decision). The example machine learning model shown in Figure 7 may be trained using a method such as that shown in Figure 5B. The machine learning model may have other architectures in other embodiments, e.g. different numbers and/or types of layers and/or parameters.

Given that the machine learning model is trained from pre-processed rate-quality data and corresponding encoding statistics extracted from an external encoder, the machine learning model does not require access to the implementation of the external encoder. Therefore, the encoding and decoding may be used as a "black-box" system. In addition, since the input to the machine learning model comprises solely encoding statistics (e.g. of the type shown in Table 1), the machine learning model does not require access to input video frames. The trained machine learning model is lightweight: it is only inferring based on compressed-domain encoding statistics (which typically comprise a few kilobytes per scene) towards encoder settings (e.g. of the type shown in Table 2) that are binary decisions per encoding parameter. Therefore, lightweight architectures of the type shown in Figure 7 can run efficiently while the current video scene is being encoded, by using the encoding statistics of one or more frames of the current video scene, and infer the optimal encoder settings for the subsequent video scene.

In embodiments, at least some of the methods described herein may be implemented by a system comprising a server and a user device (also referred to as a `client device' or `display device'). The server and the user device are operable to communicate with one another via one or more communications networks, e.g. a wireless local area network (WLAN), and one or more other networks, such as the Internet. Some parts of the presently-disclosed methods may be performed using the server, and other parts of the presently-disclosed methods may be performed using the user device. For example, during a deployment or inference stage, the server may encode video data and transmit the encoded video data as a bitstream via the communications network to the user device. The user device may then decode the encoded video data and optionally post-process the decoded image data for display. Additionally or alternatively, some of the presently-disclosed methods may be performed entirely by the server and/or entirely by the user device. For example, at least some of the training methods disclosed herein may be performed entirely at a server.

The embodiments described herein are applicable to batch processing, i.e. processing a group of images or video frames together without delay constraints (e.g. an entire video sequence), as well as to stream processing, i.e. processing only a limited subset of a stream of images or video frames, or even a select subset of a single image, e.g. due to delay or buffering constraints.

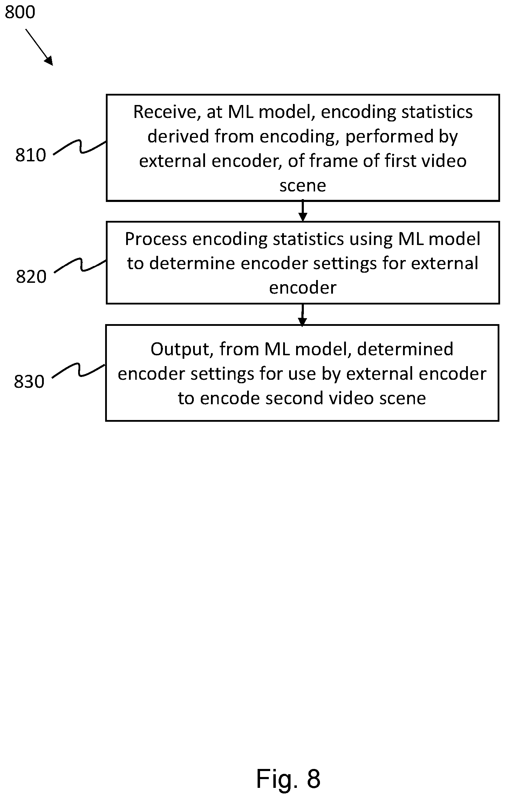

Figure 8 shows a method 800 for encoding video data, according to embodiments. The method 800 may be performed at least in part by hardware and/or software. It will be understood that an actual encoding step is not required in the method 800, although an encoding step may be performed in some embodiments. In any case, the method 800 is suitable for use with, and/or as part of, an encoding process.

At item 810, encoding statistics are received at a machine learning model. The encoding statistics are derived from an encoding, performed by an external encoder, of at least one frame of a first video scene.

At item 820, the received encoding statistics are processed using the machine learning model to determine one or more encoder settings for the external encoder. That is, the encoding statistics are input to the machine learning model, which then generates a particular output (namely particular encoder settings) based on the ingested encoding statistics. The machine learning model is trained to predict, using encoding statistics input into the machine learning model, encoder settings which, when used by the external encoder to encode video data, optimise a data rate and/or video quality associated with the encoded video data. It will be understood that the training of the machine learning model may occur prior to the method 800 being performed. That is, when the method 800 is performed, the training of the machine learning model may have already taken place.

At item 830, the determined one or more encoder settings are outputted from the machine learning model, for use by the external encoder to encode a second video scene.

In embodiments, the method 800 further comprises encoding, at the external encoder, the second video scene using the determined one or more encoder settings.

In embodiments, the processing at item 820 is performed prior to completion of an encoding of at least one further frame of the first video scene performed by the external encoder. For example, the processing at item 820 may be performed prior to or during the encoding of the at least one further frame of the first video scene. Accordingly, the one or more encoder settings for encoding the second video scene may be determined while the external encoder is still encoding the first video scene.

In embodiments, the method 800 further comprises obtaining additional encoding statistics derived from the encoding of the second video scene performed by the external encoder using the determined one or more encoder settings. The method 800 may comprise processing the additional encoding statistics using the machine learning model to determine one or more updated encoder settings for the external encoder, and outputting, from the machine learning model, the one or more updated encoder settings for use by the external encoder to encode a third video scene.

In embodiments, the machine learning model is trained to predict encoder settings which correspond to an optimal rate-quality convex hull for encoding video data.

In embodiments, the one or more encoder settings comprise one or more of: an encoding resolution, one or more scene-cut detection parameters, one or more coding block encoding modes, and one or more rate control and/or encoding buffer control parameters.

In embodiments, processing the received encoding statistics using the machine learning model further comprises determining, using the machine learning model, one or more decoder settings for decoding encoded data of the second video scene. In embodiments, the method 800 comprises outputting, from the machine learning model, the determined one or more decoder settings for use by a decoder to decode the encoded data of the second video scene. In embodiments, the one or more decoder settings comprise one or more upscaling algorithm parameters and/or one or more post-processing algorithm parameters.

In embodiments, the encoding statistics are derived from an encoding, performed by the external encoder, of frames from a plurality of video scenes including the first video scene.

In embodiments, the method 800 comprises receiving a compressed bitstream of the at least one frame of the first video scene generated by the external encoder, processing the compressed bitstream to derive the encoding statistics, and inputting the derived encoding statistics into the machine learning model.

In embodiments, the method 800 comprises obtaining the encoding statistics via an application programming interface, API, of the external encoder.

In embodiments, the encoding statistics comprise one or more of: a number of intra-encoded coding blocks in the at least one frame, a number of skipped coding blocks in the at least one frame, a number of inter-encoded coding blocks in the at least one frame, an average, minimum and/or maximum quantization step size used in the at least one frame, a number of intra-, skip and/or inter-encoded blocks of encoding of each slice within the at least one frame, an average, minimum and/or maximum sum-of-absolute-difference of each encoding slice within the at least one frame, and a compressed bitstream size of each encoding slice within the at least one frame.

In embodiments, the machine learning model is trained by calculating a loss function comprising one or more of: a binary cross-entropy loss, a Hinge loss, an L1 or L2 loss, a Huber loss, or a cosine similarity or log-cosh loss.

In embodiments, the video quality associated with encoding video data using the external encoder is measured using one or more of: a distortion metric, a perceptual score, or a quality score that incorporates the impact of dropped frames during encoding.

In embodiments, the machine learning model is trained without receiving image or video data as an input. In embodiments, the machine learning model is arranged to receive the encoding statistics as an input. In embodiments, the machine learning model is arranged to receive the encoding statistics as a sole, or only, input.

In embodiments, the processing the received encoding statistics using the machine learning model is performed prior to any encoding of the second video scene performed by the external encoder.

In embodiments, the machine learning model is trained by: for each encoder setting of a plurality of different encoder settings of the external encoder: encoding the training video scene with the external encoder using the encoder setting, and calculating one or more rate-quality values based on the encoding of the training video scene with the external encoder using the encoder setting. In embodiments, a rate-quality convex hull is determined using the calculated rate-quality values for the plurality of different encoder settings. In embodiments, slope values are calculated for the determined rate-quality convex hull. In embodiments, based on a comparison of the calculated slope values with a predetermined threshold, one or more encoder settings of the plurality of different encoder settings are discarded, to obtain a reduced set of encoder settings. The reduced set of encoder settings are used to adjust one or more parameters of the machine learning model.

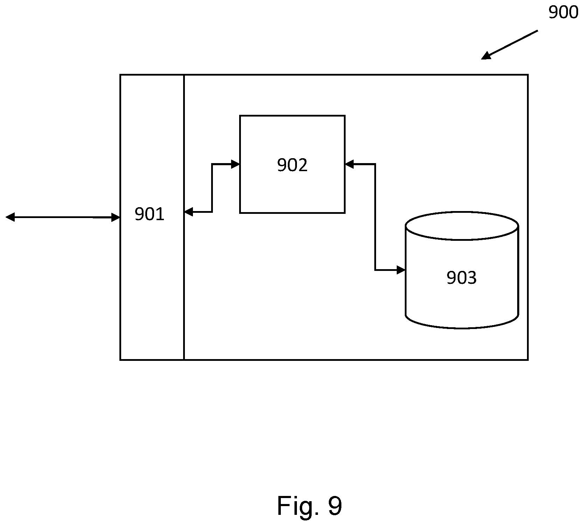

Embodiments of the disclosure include at least some of the methods described above performed on a computing device, such as the computing device 900 shown in Figure 9. The computing device 900 comprises a data interface 901, through which data can be sent or received, for example over a network. The computing device 900 further comprises a processor 902 in communication with the data interface 901, and memory 903 in communication with the processor 902. In this way, the computing device 900 can receive data, such as image data, video data, encoding statistics or various data structures, via the data interface 901, and the processor 902 can store the received data in the memory 903, and process it so as to perform the methods described herein, including processing and/or encoding data.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The present disclosure also provides a machine learning method (as well as corresponding apparatus, computing devices, computer programs, etc.) that ingests encoding metadata of an external video encoder that encodes a video scene, and predicts the optimal encoding and decoding settings to use for the scene or for a future scene.

In embodiments, the machine learning method infers encoding settings corresponding to rate-quality convex-hull optimal encoding for multiple bitrate zones of the current video scene or a future video scene.

In embodiments, the machine learning method is pretrained to infer one or more of the following parameters: encoding resolution, scene-cut detection parameters, coding block encoding modes, decoding upscaling algorithm parameters, rate-control or encoding buffer control parameters, decoding post-processing algorithm parameters.

In embodiments, the encoding metadata comprise one or more of the following: number of intra-encoded coding blocks in the frame, number of skipped coding blocks in the frame, number of inter-encoded coding blocks in the frame, average, minimum and maximum quantization step sizes used in the frame, number of intra-, skip and inter-encoded blocks of encoding of each slice within the frame, average, minimum and maximum sum-of-absolute-difference of each encoding slice within the frame, compressed bitstream size of each encoding slice within the frame.

In embodiments, the training data for the machine learning algorithm has been pre-processed to retain encoding settings corresponding to rate-quality convex-hull optimal results.

In embodiments, encoding settings leading to small or large rate-quality slope values or very-high quality encodings are removed.

In embodiments, the training of the machine learning method uses one or more of the following classification losses: a binary cross-entropy loss / Log loss, a Hinge loss, an L1 or L2 loss, a Huber loss (or regularized norm loss), a cosine similarity or log-cosh loss.

In embodiments, the quality of the decoded video is measured with a distortion metric or a perceptual score or a quality score that incorporates the impact of dropped frames from the encoding.

The present disclosure provides low-latency content-adaptive encoder tuning based on compressed-domain statistics and machine learning methods. In particular, a machine learning method is provided to control the resolution, encoding recipe, encoding bitrate and decoder post-processing of a video segment of frames. Unlike previous methods, the disclosed method (i) operates over any external video encoder and does not need access to the encoder operation (i.e., treats it as an external binary or "black box"); (ii) uses compressed-domain statistics produced by the encoder and does not use input video frames; (iii) is applicable to extremely resource- and delay-constrained environments, as it does not require the buffering of future frames of the video segment to be encoded and its runtime resource utilization is very limited due to the fact that the input comprises compressed-domain statistics.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

## Claims

1. A computer-implemented method for encoding video data, the method comprising:
receiving, at a machine learning model, encoding statistics derived from an encoding, performed by an external encoder, of at least one frame of a first video scene;
processing the received encoding statistics using the machine learning model to determine one or more encoder settings for the external encoder; and
outputting, from the machine learning model, the determined one or more encoder settings for use by the external encoder to encode a second video scene,
wherein the machine learning model is trained to predict, using encoding statistics input into the machine learning model, encoder settings which, when used by the external encoder to encode video data, optimise a data rate and/or video quality associated with the encoded video data.

2. A computer-implemented method according to claim 1, the method further comprising encoding, at the external encoder, the second video scene using the determined one or more encoder settings.

3. A computer-implemented method according to claim 2, wherein the method further comprises:
obtaining additional encoding statistics derived from the encoding of the second video scene performed by the external encoder using the determined one or more encoder settings;
processing the additional encoding statistics using the machine learning model to determine one or more updated encoder settings for the external encoder; and
outputting, from the machine learning model, the one or more updated encoder settings for use by the external encoder to encode a third video scene.

4. A computer-implemented method according to any preceding claim, wherein the processing the received encoding statistics is performed prior to completion of an encoding of at least one further frame of the first video scene performed by the external encoder.

5. A computer-implemented method according to any preceding claim, wherein the machine learning model is trained to predict encoder settings which correspond to an optimal rate-quality convex hull for encoding video data.

6. A computer-implemented method according to any preceding claim, wherein the one or more encoder settings comprise one or more of: an encoding resolution, one or more scene-cut detection parameters, one or more coding block encoding modes, and one or more rate control and/or encoding buffer control parameters.

7. A computer-implemented method according to any preceding claim,
wherein processing the received encoding statistics using the machine learning model further comprises determining, using the machine learning model, one or more decoder settings for decoding encoded data of the second video scene, and
wherein the method comprises outputting, from the machine learning model, the determined one or more decoder settings for use by a decoder to decode the encoded data of the second video scene.

8. A computer-implemented method according to claim 7, wherein the one or more decoder settings comprise one or more upscaling algorithm parameters and/or one or more post-processing algorithm parameters.

9. A computer-implemented method according to any preceding claim, wherein the encoding statistics are derived from an encoding, performed by the external encoder, of frames from a plurality of video scenes including the first video scene.

10. A computer-implemented method according to any preceding claim, wherein the method comprises:
receiving a compressed bitstream, generated by the external encoder, of the at least one frame of the first video scene;
processing the compressed bitstream to derive the encoding statistics; and
inputting the derived encoding statistics into the machine learning model.

11. A computer-implemented method according to any preceding claim, wherein the encoding statistics comprise one or more of: a number of intra-encoded coding blocks in the at least one frame, a number of skipped coding blocks in the at least one frame, a number of inter-encoded coding blocks in the at least one frame, an average, minimum and/or maximum quantization step size used in the at least one frame, a number of intra-, skip and/or inter-encoded blocks of encoding of each slice within the at least one frame, an average, minimum and/or maximum sum-of-absolute-difference of each encoding slice within the at least one frame, and a compressed bitstream size of each encoding slice within the at least one frame.

12. A computer-implemented method according to any preceding claim, wherein the machine learning model is trained by:
for each encoder setting of a plurality of different encoder settings of the external encoder:
encoding a training video scene with the external encoder using the encoder setting; and
calculating one or more rate-quality values based on the encoding of the training video scene with the external encoder using the encoder setting;
determining a rate-quality convex hull using the calculated rate-quality values for the plurality of different encoder settings;
calculating slope values for the determined rate-quality convex hull;
based on a comparison of the calculated slope values with a predetermined threshold, discarding one or more encoder settings of the plurality of different encoder settings to obtain a reduced set of encoder settings; and
adjusting one or more parameters of the machine learning model using the reduced set of encoder settings.

13. A computer-implemented method according to any preceding claim, wherein the processing the received encoding statistics using the machine learning model is performed prior to any encoding of the second video scene performed by the external encoder.

14. A computing device comprising:
one or more processors; and
memory,
wherein the computing device is arranged to perform, using the one or more processors, a method according to any preceding claim.

15. A computer program product arranged, when executed on a computing device comprising one or more processors and memory, to cause the computing device to perform, using the one or more processors, a method according to any of claims 1 to 13.
